# EUROPEAN PATENT SPECIFICATION

(11) **EP 0 663 777 B1**
(45) Date of publication and mention of the grant of the patent: **23.06.2004**
(21) Application number: 95850001.9
(22) Date of filing: 03.01.1995
(51) Int. Cl.: H04B 7/26

(54) **Arrangement in a DECT system for synchronizing a virtual base station with a central base station**
Anordnung in einem DECT System zur Synchronisation einer virtuellen Basisstation mit einer zentralen Basisstation
Dispositif pour synchroniser une station de base virtuelle avec une station de base centrale dans un système DECT

(30) Priority: 18.01.1994 SE 9400119
(43) Date of publication of application: 19.07.1995
(73) Proprietor: TELIA AB, 123 86 Farsta (SE)
(72) Inventor: Olanders, Peter, SE-234 33 Lomma (SE)
(74) Representative: Hopfgarten, Nils

(56) References cited:
- EP-A- 0 415 502
- EP-A- 0 526 285
- US-A- 5 124 980

## Description

### TECHNICAL FIELD

The present invention relates to an arrangement in a DECT system, which exhibits a central base and a number of virtual bases and where, a cable network or central antenna network, is included in the propagation function within the system. The DECT system operates with a synchronizing function for synchronizing a respective virtual base to the central base. The synchronizing function can be related to the amplifiers of the virtual bases. The synchronizing information in the form of one or more synchronizing pulses is sendable out on the cable network or the central antenna network, and the central base includes a synchronizing unit arranged to generate the respective synchronizing pulse and to synchronize it with the downlink sent out from the central base.

### PRIOR ART

Larger coverage areas for a cordless telephone system in the form of DECT (Digital European Cordless Telecommunications) with the aid of for example a cable TV network or central antenna network, have basically been previously known for cordless telephone systems in general. Thus, for example, it has been previously known from Patent Application WO 93/06669 to combine cable TV systems and a cordless digital telephone system. In the system, the cable TV network is used for distributing telephone signals between a centrally connected base unit and the cable TV outlets in affected dwellings belonging to the said cable TV network. In this system, active elements are used as amplifier in the dwellings for obtaining the right signal level in the system. The said patent specification also describes a system which exhibits the said characteristics and where fibre optical distribution of telephone and TV signals is mainly used.

From EP 421 602, it has previously been known to utilize a hybrid network which can offer a number of different services. The said services include TV transmission and distribution of cordless telephony. According to the document, the base unit can be placed in a node for being able to communicate with a number of cordless telephones in a number of dwellings. The distribution from the node to the dwellings occurs by means of coaxial cable. In the document it is proposed that the operating frequency for cordless telephony is transformed to a frequency which is more suitable for transmission by coaxial cable, having in mind, for example, attenuation and frequency space. The system is intended to utilize cordless telephony according to the CT2 standard.

According to the American Patent Specification US 5 124 980, it is known to establish telecommunication over an existing cable TV network. According to the document, both coaxial cable and fibre optic systems can be utilized. This document relates to wire-connected telephony.

EP-A-0 526 285 discloses a system for distributing radio telephone signals over a cable television network between a base station and remote antenna site. The base station receives from a public telephone network parallel channels of outbound voice signal. The base station will digitize each of these outbound telephone signals, and time compress them to fit in a transmit frame. The transmit frame is modulated on a subcarrier and applied to the cable television network.

### DESCRIPTION OF THE INVENTION

### TECHNICAL PROBLEMS

There is quite generally a need for being able to utilize the principles specified by way of introduction in connection with a DECT system in multi-family areas where insufficient radio coverage can be a problem. There are several different types of obstacles to radiowave propagation, such as walls, buildings, vegetation and so forth. DECT is a low-power system with a top power of maximum 250 mW ERP with a bandwidth of 2 MHz, which is why it can be difficult to reach out to all dwellings within a multi-family area. Multi-family area here means, among other things, blocks of flats and continuous residential areas. This normally requires a concentration of base stations or repeaters which technically complicates the system and also makes a new establishment more expensive. The invention aims to solve this problem, among others.

In the use of virtual DECT base stations, it is essential to be able to synchronize the virtual base stations with the central base station, which normally consists of a real base station. The present invention deals with, among other things, the utilization of simple two-way amplifiers at each coaxial cable outlet. As DECT is a TDMA/TDD system, synchronization of the following amplifiers which constitute the virtual DECT base stations is of great importance. Poor synchronization considerably lowers the quality and can, for example, drastically reduce the radio range. The framelength, which can be made up of the time for 12+12 time slots is 10 ms, which, for example, entails that the user data are 32 kbit/s (ADPCM). Having regard to this fact, it is essential that the synchronization which is necessarily required for the amplifiers which are the main components in the virtual DECT base stations is designed to function well. These amplifiers must be synchronized with the frame structure of the DECT system so that the downlink passes and is amplified in one direction within the first 5 ms and correspondingly for the uplink within the following 5 ms of one frame. The problem thus lies in synchronizing a respective virtual base station with the central station, and above all there is a problem in proposing how the necessary synchronization information will be conveyed to the virtual base stations. The idea of utilizing virtual base stations has the aim of being able to use simpler equipment than complete DECT equipment, for example repeaters, and also the synchronizing function must be technically simple and economically advantageous and still operate reliably. The invention also intends to solve this set of problems.

### SOLUTION

The feature which can be mainly considered to be characteristic of the novel invention is, for example, that the synchronization information in the form of one or more synchronizing pulses can be sent out on the propagation network and that the central base includes a synchronizing unit which generates a respective synchronizing pulse and synchronizes this with preferably the downlink.

In embodiments according to the present invention, the synchronizing unit in the central base is arranged to be able to displace the inherent DECT system signal in relation to the synchronizing signal, the synchronizing unit in the central base is based on the outgoing DECT signal from the central base so that the synchronizing pulse is generated by the TDMA structure in a frame transmitted previously, whereby the delay can be adjusted as required.

### ADVANTAGES

By means of what has been specified above, the DECT system is constructed for cooperating with a propagation network in the form of a cable TV network or central antenna network. By this means, the DECT system can be coupled in at a central point or node in a cable TV or central antenna network for obtaining wide coverage in a multi-family area with blocks of flats. bungalows and so forth. The antenna outlet in each flat/bungalow will thus operate as a virtual base in the DECT system by means of the fact that an antenna is connected to the coaxial cable in the dwelling. By utilizing a propagation network in question, it becomes technically simpler and economically more advantageous to utilize such a propagation network compared with the methods of concentrating the base stations or installing repeaters. There is no pronounced lowering of the total capacity in the system, which would unavoidably occur in the case where repeaters are used. The invention is especially applicable where DECT equipment is used via coaxial cable networks.

### DESCRIPTION OF THE FIGURES

In the text following, a currently proposed embodiment of an arrangement which exhibits the characteristics significant to the invention will be described, at the same time referring to attached drawings in which:
Figure 1 shows in a vertical section the installation in a block of flats,
Figure 2 shows the configuration of the frame structure in the DECT system, and
Figure 3 shows in a basic diagram form a known DECT system.

### DETAILED EMBODIMENT

The invention is based on a cable or central antenna network being used as propagation network together with necessary equipment for amplifying and transmitting the DECT signalling. For this, two solutions are presented: a "central" solution and a distributed solution.

Central antenna networks (this designation is here also used for cable TV networks) are often constructed as a star network with several connections on each arm. The networks are used for transmitting TV signals, most frequently within the frequency range 50-1000 MHz. Coaxial cable is predominantly used as a medium which can be used very well for transmitting at 2 GHz (the operating frequency of DECT) even if with somewhat higher attenuation than at the TV frequencies.

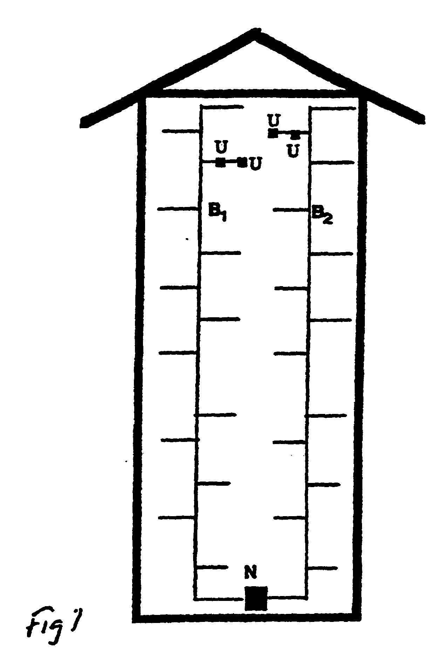

The central antenna outlets, see Figure 1, in the dwellings most frequently contain some form of high-pass filter for the part of the signal which is above the broadcast band (88-108 MHz), and some form of attenuator /directional coupler for preventing the network from being affected by individual TV sets. These filters, attenuators and directional couplers can be bypassed for the equipment which will transmit DECT signalling.

In a multi-family area, a DECT base station can be placed in a node N of the central antenna network, such nodes being most frequently found one in each block of flats or one in each neighbourhood. The DECT base station can be provided with the number of radio units needed for providing a sufficiently high capacity in the area. A DECT base station can be extended to a maximum capacity of 120 Erlang (this requires 10 radio units). The dynamic channel allocation described in the DECT standard handles and distributes channels to each user. A system configured in this manner will still provide the concentrator power which is normally obtained via atmospheric radio. The present embodiment thus entails no restrictions of this type.

The arrangement described here is made possible by the very high capacity of the DECT (10,000 Erlang/km²/flat), without any capacity problems needing to arise.

This arrangement can be said to create a virtual DECT base station at each central antenna outlet so that a user can have access to all the (technical) facilities and services contained in the DBCT standard, and share the capacity of the base station with other users as if all users were located in the direct vicinity of the real base station.

With this arrangement, a number of pseudo cells is created (1-2 in each dwelling) and the DECT functionality provides handover between these pseudo cells (in reality, intracell handover) without any problems.

In both cases, an antenna for DECT is needed which is connected to the central antenna outlet in the dwelling.

The two embodiments complement one another which, as selected in a possible installation, is due to the architecture and quality of the cable TV network.

Formally, there are no base stations in the DECT standard where, instead, "portable parts" and "fixed parts" are found.

According to the DECT standard, the output power must not be higher than 250 mW, which is measured at the "antenna output" on the DBCT equipment.

In a central arrangement, the DECT signals must be amplified somewhat in order to compensate for the losses which originate from the central antenna network. In this proposal, this is done by means of a centrally located unit (amplifier) directly connected together with the DECT base station (as a booster), which is connected to N in the figure.

The amplifier must be two-way (both uplink and downlink). So that no unwanted resonance is caused, the amplifier is provided with signalling to the DECT base station so that the units are synchronized.

In the case where the TV network is not balanced so that the arms of the network do not all have the same attenuation (due to different length or different numbers of connected outlets), separate amplifiers can be used. One possibility is to distribute the DECT frequency band over the different arms (B) by limiting the amplifiers to one or a small number of the DECT carrier frequencies. Otherwise, the amplifier will have the full DECT bandwidth (1880-1900 MHz).

The advantages of this configuration are: simple to amplify all DECT channels, simple to control the output level, including per time slot, and cheap since only one amplifier is needed (per radio or carrier).

In a decentralized arrangement, single two-way amplifiers are coupled to the central antenna outlets U in the dwellings, and a conventional DBCT base station is connected to the node N. Control information about a shift between uplink and downlink can be sent on the coaxial cable at low frequency and, similarly, the amplifiers can obtain operating voltage via the coaxial cable.

The advantages of this embodiment are that the level can be set individually for each amplifier and that received signals (downlink) are amplified so early that they cannot be drowned in the noise.

These units then become DECT base stations which can be type-approved according to the DECT standard, and no regulatory problems thus need arise.

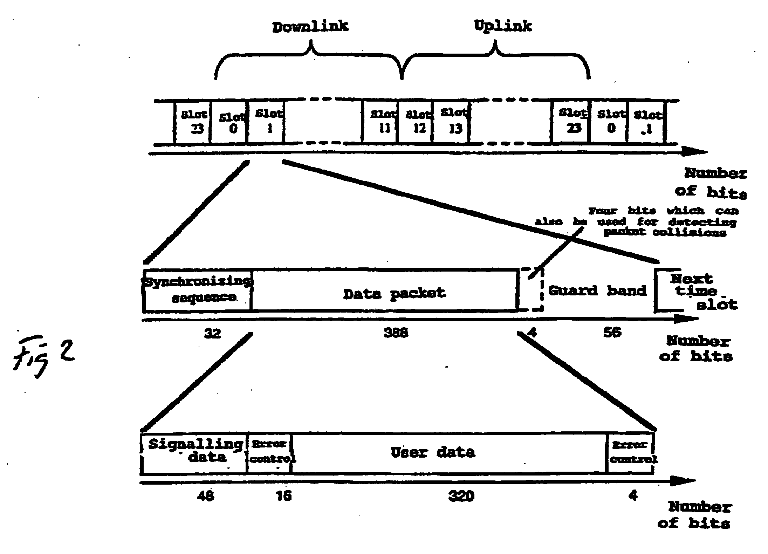

Figure 2 shows the configuration, known per se, of the TDMA/TDD structure of the DECT system. Since the structure is known, it will not be described in further detail here. However, see the discussion under "Technical problems" above.

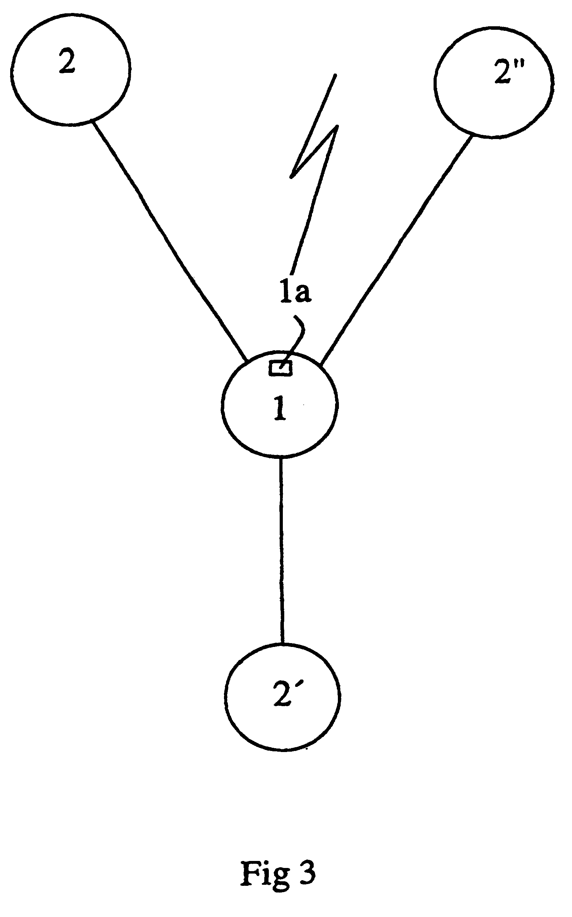

In Figure 3, a central base station in a known DECT system is shown by 1 and virtual bases by 2, 2', 2''. The synchronizing unit according to the above is shown by la. The connection with a higher level station in the DECT system is symbolized by 4.

The following form of synchronization is appropriate:

### Transmission of synchronizing pulses via the coaxial cable network

This section describes how a synchronizing information generated centrally (that is to say in the real base) is used.

One of the simplest ways of synchronizing VB (virtual base stations) would be to send out a synchronizing pulse on the coaxial network. In its simplest embodiment, this can be done by a square wave with a period of T=10 ms, that is to say a frequency of = 100 Hz.

The real base (RB) is complemented by a synchronizing unit which generates the square pulse and synchronizes this with, for example, the downlink (which is sent out from the RB).

It is conceivable that the two signals (inherent DECT signal and synchronization signal) have different propagation speeds where they have considerably different frequencies (2 GHz and, respectively, 100 Hz). This is compensated to a certain extent by the synchronizing unit in RB being provided with the possibility of displacing the two signals with respect to one another.

The synchronizing unit in RB is based on the outgoing DECT signal from RB so that the synchronizing pulses are generated by the TDMA structure in a frame transmitted "earlier", when the delay can be adjusted as required.

The invention is not limited to the embodiment shown above as an example but can undergo modifications within the context of the following patent claims and the concept of the invention.

## Claims

1. Arrangement in a DECT system which exhibits a central base station (1) and a number of virtual base stations (2, 2', 2") and where a cable network or central antenna network is included in the propagation function within the system and where the system operates with a synchronizing function for synchronizing a respective virtual base station with the central base station, which synchronizing function is related to the amplifiers of the virtual base stations, the synchronizing information in the form of one or more synchronizing pulses being sendable out on the cable network or the central antenna network, the central base including a synchronizing unit arranged to generate the respective synchronizing pulse and to synchronize it with the downlink sent out from the central base, **characterized in that** the synchronizing unit in the central base is arranged to displace an inherent DECT system signal in relation to the synchronizing signal, and is based on an outgoing DECT signal from the central base so that the synchronizing pulses are generated by the TDMA structure in a frame transmitted earlier, whereby delay is adjustable as required.

2. Arrangement according to claim 1, **characterized in that** said amplifiers are arranged to achieve synchronization with the frame structure of the DECT system so that the downlink passes and is amplified in one direction within the first 5 ms, and to subject the uplink to the corresponding process within the following 5 ms of one frame.

3. Arrangement according to claim 1 or 2, **characterized in that** a respective virtual base station is coupled to a central point/node in the cable network or central antenna network.

## Patentansprüche

1. Anordnung in einem DECT-System, das eine zentrale Basisstation (1) und eine Anzahl von virtuellen Basisstationen (2, 2', 2'') aufweist und in dem ein Kabelnetz oder ein zentrales Antennennetz für die Ausbreitungsfunktion innerhalb des Systems eingeschlossen ist und in dem das System mit einer Synchronisierungsfunktion zur Synchronisierung einer jeweiligen virtuellen Basisstation mit der zentralen Basisstation arbeitet, welche Synchronisierungsfunktion auf die Verstärker der virtuellen Basisstationen bezogen ist, wobei die Synchronisierungsinformation in Form eines oder mehrerer Synchronisierungspulse auf dem Kabelnetz oder dem zentralen Antennennetz aussendbar ist, die zentrale Basis eine Synchronisiereinheit einschließt, die so ausgebildet ist, den entsprechenden Synchronisierungspuls zu erzeugen und diesen mit dem Downlink, der von der zentralen-Basis ausgesendet wird, zu synchronisieren, **dadurch gekennzeichnet, dass** die Synchronisiereinheit in der zentralen Basis so ausgebildet ist, dass sie ein inhärentes DECT-Systemsignal in Bezug auf das Synchronisiersignal verschiebt und auf einem ausgehenden DECT-Signal von der zentralen Basis beruht, so dass die Synchronisierungspulse von der TDMA-Struktur in einem zuvor gesendeten Datenblock erzeugt werden, wodurch die Verzögerung nach Bedarf einstellbar ist.

2. Anordnung nach Anspruch 1, **dadurch gekennzeichnet, dass** die Verstärker so angeordnet sind, Synchronisierung mit der Datenblockstruktur des DECT-Systems zu erreichen, so dass der Downlink durchgeht und in einer Richtung innerhalb der ersten 5 ms verstärkt wird, und den Uplink innerhalb der folgenden 5 ms eines Datenblocks dem entsprechenden Vorgang zu unterziehen.

3. Anordnung nach Anspruch 1 oder 2, **dadurch gekennzeichnet, dass** eine jeweilige virtuelle Basisstation mit einem zentralen Punkt/Knoten im Kabelnetz oder im zentralen Antennennetz verbunden ist.

## Revendications

1. Agencement dans un système DECT qui présente une station de base centrale (1) et un certain nombre de stations de base virtuelles (2, 2', 2'') et où un réseau de câbles ou un réseau d'antennes central est compris dans la fonction de propagation à l'intérieur du système, et où le système fonctionne avec une fonction de synchronisation pour synchroniser une station de base virtuelle respective avec la station de base centrale, laquelle fonction de synchronisation est liée aux amplificateurs des stations de base virtuelles, les informations de synchronisation sous la forme d'une ou de plusieurs impulsions de synchronisation pouvant être envoyées sur le réseau de câbles ou le réseau d'antennes central, la base centrale comprenant une unité de synchronisation agencée pour générer l'impulsion de synchronisation respective et pour la synchroniser avec la liaison descendante envoyée de la base centrale, **caractérisé en ce que** l'unité de synchronisation dans la base centrale est agencée pour déplacer un signal de système DECT inhérent en relation avec le signal de synchronisation et est basée sur un signal DECT sortant de la base centrale de sorte que les impulsions de synchronisation sont générées par la structure TDMA dans une trame transmise précédemment, moyennant quoi un retard est ajustable selon les besoins.

2. Agencement selon la revendication 1, **caractérisé en ce que** lesdits amplificateurs sont agencés pour réaliser une synchronisation avec la structure de trame du système DECT de sorte que la liaison descendante passe et soit amplifiée dans une direction dans les 5 premières millisecondes et pour soumettre la liaison montante au processus correspondant dans les 5 millisecondes suivantes d'une trame.

3. Agencement selon la revendication 1 ou 2, **caractérisé en ce qu'**une station de base virtuelle respective est connectée à un point/noeud central dans le réseau de câbles ou le réseau d'antennes central.
